# EUROPÄISCHE PATENTSCHRIFT

(11) **EP 2 148 309 B1**
(45) Veröffentlichungstag und Bekanntmachung des Hinweises auf die Patenterteilung: **09.10.2013**
(21) Anmeldenummer: 09161435.4
(22) Anmeldetag: 28.05.2009
(51) Int. Cl.: G08G 1/16, B60W 30/00

(54) **Gefahrenwarnassistent bei erhöhter Unfallgefahr**
Hazard warning assistant for increased risk of accident
Assistant d'alerte aux dangers en cas de risque d'accident élevé

(30) Priorität: 23.07.2008 DE 102008040630
(43) Veröffentlichungstag der Anmeldung: 27.01.2010
(73) Patentinhaber: ROBERT BOSCH GMBH, 70442 Stuttgart (DE)
(72) Erfinder: Moennich, Joerg, 01159, Dresden (DE); Schaaf, Gunther, 70806, Kornwestheim (DE); Haug, Matthias, 70469, Stuttgart (DE)

(56) Entgegenhaltungen:
- WO-A1-2006/024185
- US-A1- 2007 096 887
- US-A1- 2008 167 819

## Beschreibung

Die Erfindung betrifft ein Verfahren zum Informieren des Fahrers eines Kraftfahrzeugs über eine erhöhte Unfallgefahr.

### Stand der Technik

Eine Warnung an Verkehrsstellen mit einer erhöhten Unfallgefahr erfolgt im Straßenverkehr nicht oder nur durch Ampeln, Beschilderung oder Markierungen. Beispielsweise werden im Bereich von Haltestellen des öffentlichen Personennahverkehrs, an denen bedingt durch ein- und aussteigende Personen eine erhöhte Unfallgefahr herrscht, lediglich Hinweisschilder verwendet sowie in seltenen Fällen Vorwarnschilder und Markierungen, die auf die potenzielle Unfallgefahr hinweisen.

Die Erfindung soll den Fahrer des Kraftfahrzeugs informieren, wenn für diesen eine erhöhte Unfallgefahr vorliegt.

### Offenbarung der Erfindung

Erfindungsgemäß ist vorgesehen, dass die geographische Position des Kraftfahrzeugs erfasst wird, aus ihr gemeinsam mit mindestens einer Zusatzinformation ein Unfallrisiko ermittelt wird und der Fahrer bei Ermittlung eines vorbestimmten, erhöhten Unfallrisikos mit einem Warnsignal gewarnt wird. Bei Verwendung eines Kraftfahrzeugs im öffentlichen Straßenverkehr liegt für den Fahrer immer ein Unfallrisiko und somit eine gewisse Unfallgefahr vor. Das erfindungsgemäße Ermitteln des Unfallrisikos sieht vor, ein aktuelles Unfallrisiko festzustellen und zu bewerten. Liegt das aktuelle Unfallrisiko über einem vorbestimmten Wert, so wird es als erhöhtes Unfallrisiko bewertet und der Fahrer wird aufgrund des erhöhten Unfallrisikos gewarnt. Diese Warnung informiert den Fahrer somit vor der erhöhten Unfallgefahr, die aufgrund des erhöhten

Die US 2007/0096887A1 zeigt ein Warnsystem für ein Fahrzeug vor einer Kollision mit einem anderen Fahrzeug. Das Warnsystem ermittelt anhand Positionen, Geschwindigkeiten und Fahrrichtungen der Fahrzeuge eine Wahrscheinlichkeit einer Kollision und erzeugt gegebenenfalls eine Warnung.

Unfallrisikos besteht. Zum Ermitteln des Unfallrisikos wird einerseits die geographische Position des Kraftfahrzeugs und andererseits eine Zusatzinformation verwendet. Die geographische Position des Kraftfahrzeugs kann beispielsweise durch ein satellitengestütztes Navigationssystem ermittelt werden. Bei der Zusatzinformation handelt es sich um Information, die unfallkritische Situationen anzeigt, welche dann einer Ermittlung des Unfallrisikos zugrunde liegen.

Nach einer Weiterbildung der Erfindung ist vorgesehen, dass als Zusatzinformation mindestens eine geographische Position von einer vorbestimmten Verkehrsstelle verwendet wird, an der ein erhöhtes Unfallrisiko vorliegt oder vorliegt, wenn mindestens ein Zusatzparameter erfüllt wird. Somit kann zum Einen an der vorbestimmten Verkehrsstelle dauerhaft eine unfallkritische Situation vorliegen, wie beispielsweise an einer Verkehrsstelle mit einer scharfen Kurve, wodurch dauerhaft ein erhöhtes Unfallrisiko vorliegt. Zum Anderen kann an der vorbestimmten Verkehrsstelle lediglich zeitweise eine unfallkritische Situation vorliegen, weshalb für diesen Fall mindestens ein Zusatzparameter eingesetzt werden muss, um zu erkennen, ob aktuell ein erhöhtes Unfallrisiko vorliegt. Dieser Zusatzparameter kann beispielsweise die Anwesenheit von Personen an der Verkehrsstelle oder eine bestimmte Uhrzeit sein, bei der an der Verkehrsstelle eine unfallkritische Situation vorliegt. Ferner sind als Zusatzparameter die Geschwindigkeit und/oder Position und Richtung des eigenen Kraftfahrzeugs denkbar.

Nach einer Weiterbildung der Erfindung ist vorgesehen, dass als Zusatzinformation mindestens ein im Kraftfahrzeug empfangenes Gefahrensignal eines Gebers verwendet wird. Das Gefahrensignal wird nur dann ausgesendet, wenn eine unfallkritische Situation eintritt und somit ein erhöhtes Unfallrisiko vorliegt. Als Geber sind hierbei lokale sowie globale Informationssysteme denkbar, wie beispielsweise eine an einer entsprechenden Verkehrsstelle positionierte Sendeeinrichtungen, der Verkehrsfunk oder mobile Telekommunikationssysteme.

Nach einer Weiterbildung der Erfindung ist vorgesehen, dass sich das vorbestimmte, erhöhte Unfallrisiko ergibt, wenn sich die erfasste Position des Kraftfahrzeugs in einem vorgegebenen Bereich um die Verkehrsstelle befindet und gleichzeitig das Gefahrensignal empfangen wird. Auf diese Weise wird nur dann der Fahrer informiert, wenn tatsächlich für ihn ein erhöhtes Unfallrisiko vorliegt. So werden nur unfallkritische Situationen im unmittelbaren Bereich des Kraftfahrzeugs bei dem Ermitteln des Unfallrisikos mit einbezogen, indem die erfasste Position des Kraftfahrzeugs als eine erste Bedingung für ein auslösen des Warnsignals in einem vorbestimmten Bereich um die Verkehrsstelle liegen muss. Zudem muss als eine zweite Bedingung ein Gefahrensignal empfangen werden, das das aktuelle Vorhandensein der unfallkritischen Situation bestätigt. Auf diese Weise ergibt sich eine sehr differenzierte Möglichkeit, den Fahrer nur bei einem tatsächlich erhöhten Unfallrisiko mit einem Warnsignal zu warnen. Dadurch, dass der Fahrer nur bei tatsächlich erhöhtem Unfallrisiko gewarnt wird, behält das Warnsignal seine warnende Wirkung gegenüber dem Fahrer bei und es wird einer Gewöhnung des Fahrers an das Warnsignal vorgebeugt.

Nach einer Weiterbildung der Erfindung ist vorgesehen, dass die geographische Position der Verkehrsstelle als innerhalb des Kraftfahrzeugs gespeicherte Zusatzinformation vorliegt und/oder dass sie als von außen, kabellos zugeführte Zusatzinformation vom Kraftfahrzeug empfangen wird. Die gespeicherte Zusatzinformation besitzt den Vorteil, dass sie jederzeit sehr schnell zur Verfügung steht, wohingegen die von außen, kabellos zugeführte Zusatzinformation sehr aktuell durch ein entsprechendes Verfahren zusätzliche Geschehnisse berücksichtigen kann. Dabei kann vorzugsweise vorgesehen sein, dass die gespeicherte Zusatzinformationen durch die zugeführte Zusatzinformation erweitert, ersetzt oder entfernt wird. Es ist insbesondere vorgesehen, dass die gespeicherte Zusatzinformation in einem satellitengestützten Navigationssystem enthalten ist. Die von außen, kabellos zugeführte Zusatzinformation kann beispielsweise von dem Geber, einem dafür vorgesehenen Funknetzwerk, einem Rundfunksender oder über mobile Telekommunikationsmittel empfangen werden.

Nach der Erfindung ist vorgesehen, dass als Verkehrsstelle mindestens eine Haltestelle von Transportmitteln des öffentlichen Personennahverkehrs herangezogen wird. An Haltestellen des öffentlichen Personennahverkehrs kommt es häufig zu einem erhöhten Unfallrisiko durch Personen, die eines der Transportmittel aufsuchen oder verlassen. Dabei kommt es häufig dazu, dass die Personen in dem Bereich um die Transportmittel in den Straßenverkehr gelangen, wobei die Personen gegenüber dem Straßenverkehr unaufmerksam sind. Somit ist es vorteilhaft, Haltestellen des öffentlichen Personennahverkehrs als vorbestimmte Verkehrsstellen heranzuziehen, da hier durch Warnen des Fahrers vor dem erhöhten Unfallrisiko ein Schutz des Fahrers und der ein- und aussteigenden Personen herbeigeführt wird. Es ist auch denkbar, dass die Geschwindigkeit und/oder die Position des Transportmittels als Zusatzparameter verwendet werden.

Nach einer Weiterbildung der Erfindung ist vorgesehen, dass das Transportmittel des öffentlichen Personennahverkehrs als Geber wirkt. Somit ist es möglich, den Fahrer gezielt dann zu warnen, wenn eine Gefahr von dem Transportmittel ausgeht. Die Verwendung des Transportmittels als Geber ermöglicht, auch an nicht gesicherten Haltestellen Gefahrensignale auszusenden und den Fahrer zu warnen.

Nach einer Weiterbildung der Erfindung ist vorgesehen, dass das Gefahrensignal von dem Transportmittel dann ausgesendet wird, wenn es sich im Bereich der Haltestelle befindet. Da, wie bereits erwähnt, insbesondere an Haltestellen durch ein- sowie aussteigende Personen unfallkritische Situationen herbeigeführt werden können, ist es besonders vorteilhaft, wenn von dem Transportmittel dann ein Gefahrensignal ausgesendet wird, wenn es sich im Bereich der Haltestelle befindet. Dies kann bereits dann geschehen, wenn sich das Transportmittel der Haltestelle nähert, da in diesem Fall häufig eine Situation eintritt, in der eine Person versucht auf schnellstmöglichstem Wege das Transportmittel zu erreichen und sich dabei unaufmerksam gegenüber des Straßenverkehrs verhält. Das Gefahrensignal kann auch dann ausgesendet werden, wenn sich das Transportmittel in der Haltestelle befindet, da eine größere Anzahl Personen in der Regel das Transportmittel verlässt und damit in den Straßenverkehr eintritt. In dem gleichen Zusammenhang ist es denkbar, das Gefahrensignal seitens des Transportmittels auszusenden, wenn das Transportmittel die Haltestelle verlässt. Besonders vorteilhaft ist es, wenn das Transportmittel seine eigene geographische Position erfasst, insbesondere mittels eines satellitengestützten Navigationssystems. Auf diese Weise kann es dann das Gefahrensignal aussenden, wenn sich das Transportmittel an einer entsprechenden vorbestimmten Verkehrsstelle befindet. Alternativ oder zusätzlich sind stationäre Funkanlagen denkbar, die im Bereich der Haltestelle angeordnet sind und den Transportmitteln deren geographische Position übermitteln und/oder direkt ein Gefahrensignal zu gegebener Zeit aussenden. Die Aussendung des Gefahrensignals kann auch von einer Warnblinkanlage des Transportmittels, das sich im Haltestellenbereich befindet, abhängig gemacht werden, da bei eingeschalteter Warnblinkanlage eine erhöhte Aufmerksamkeit wie Schrittgeschwindigkeit oder ein Anhalten vorgeschrieben ist.

Nach einer Weiterbildung der Erfindung ist vorgesehen, dass das Warnsignal optisch, akustisch und/oder haptisch auf den Fahrer wirkt. Somit ist es möglich, mittels eines optischen Warnsignals wie beispielsweise eines blinkenden Lichts oder einem Warnhinweis in einem Display zu warnen. Ein akustisches Warnsignal kann beispielsweise mittels eines Signaltons oder einer Tonfolge warnen. Als haptisches Warnsignal ist beispielsweise ein Vibrationsalarm an einem Lenkrad denkbar.

Die Erfindung betrifft ferner eine Fahrzeugassistenzanordnung zum Informieren des Fahrers eines Kraftfahrzeugs über eine erhöhte Unfallgefahr, insbesondere zur Durchführung des voran beschriebenen Verfahrens, mit einer Navigationseinrichtung, die die geographische Position des Kraftfahrzeugs ermittelt, einer Einrichtung, die mindestens eine Zusatzinformation besitzt oder empfängt, einer Ermittlungsvorrichtung, die aus der Position des Kraftfahrzeugs und der Zusatzinformation ein Unfallrisiko ermittelt und einem Warnsignalgeber, der auf den Fahrer wirkt, wenn die Ermittlungsvorrichtung ein vorbestimmtes erhöhtes Unfallrisiko ermittelt.

In einer Weiterbildung der Fahrzeugassistenzanordnung ist ein Zusatzinformationsempfänger innerhalb des Kraftfahrzeugs vorgesehen, der die Zusatzinformation von außen, kabellos empfängt. Dieser Zusatzinformationsempfänger kann insbesondere als satellitengestütztes Navigationssystem, als Autoradio mit Verkehrsfunkeinrichtung oder als mobiles Telekommunikationsmittel wie beispielsweise ein Internetempfänger oder Mobiltelefon, ausgebildet sein. Auch ein gesonderter Zusatzinformationsempfänger im Kraftfahrzeug ist denkbar, der speziell auf den Empfang von Gefahrensignalen ausgelegt ist.

Nach einer vorteilhaften Weiterbildung der Erfindung ist mindestens ein Gefahrensignalsender eines Transportmittels des öffentlichen Personennahverkehrs vorgesehen, der mindestens eine Zusatzinformation in Form eines Gefahrensignals an den Zusatzinformationsempfänger sendet.

Ferner können dem Fahrassistenzsystem Aktuatoren zugeordnet sein, die Eingriffe in die Kraftfahrzeugführung, wie beispielsweise eine automatische Teil- oder Vollbremsung, ermöglichen

### Kurze Beschreibung der Zeichnungen

Die Zeichnungen veranschaulichen die Erfindung anhand eines Ausführungsbeispiels, und zwar zeigt:
- Figur 1: eine erste unfallkritische Situation mit erhöhtem Unfallrisiko,
- Figur 2: eine zweite unfallkritische Situation mit erhöhtem Unfallrisiko und
- Figur 3: Kommunikationspfade des erfindungsgemäßen Verfahrens.

### Ausführungsform(en) der Erfindung

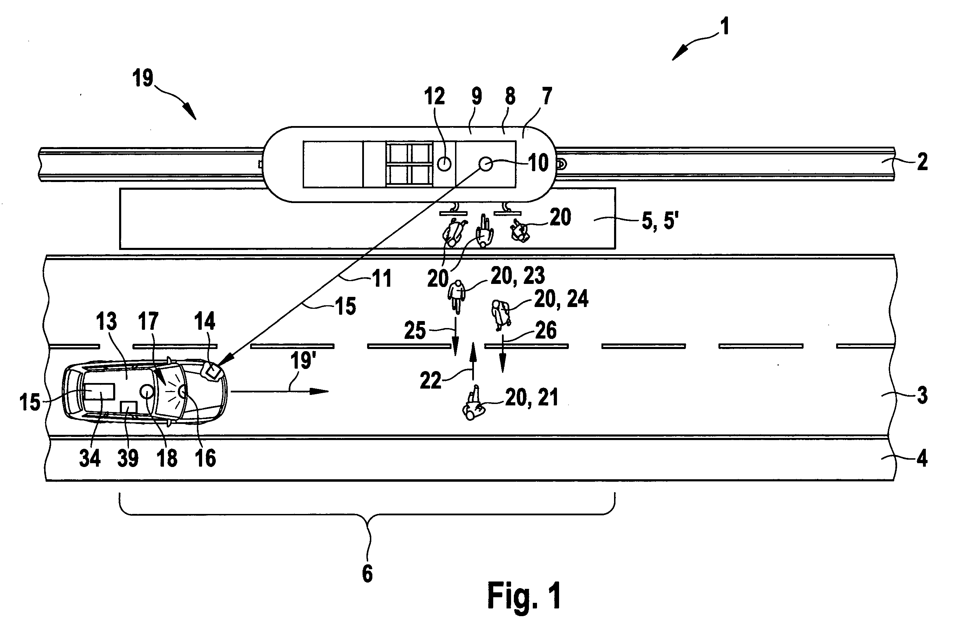

Die Figur 1 zeigt einen geographischen Ausschnitt 1 mit einer Gleisstrecke 2 des öffentlichen Personennahverkehrs, einer Straße 3 sowie einem Fußgängerweg 4. Ferner ist zwischen der Gleisstrecke 2 und der Straße 3 eine vorbestimmte Verkehrsstelle 5 in Form einer Haltestelle 5' angeordnet, welcher einen Haltestellenbereich 6 ausbildet. Der Haltestellenbereich 6 erstreckt sich dabei von der Haltestelle 5' über die Straße 3 auf den Fußgängerweg 4. Auf der Gleisstrecke 2, auf Höhe der Haltestelle 5', befindet sich ein Transportmittel 7 des öffentlichen Personennahverkehrs in Form eines Zuges 8. Das Transportmittel 7 ist als Geber 9 ausgebildet, indem es einen Gefahrensignalsender 10 aufweist, der ein Gefahrensignal 11 aussendet. Ferner besitzt das Transportmittel 7 eine Navigationseinrichtung 12, die satellitengestützt eine geographische Position des Transportmittels 7 ermittelt. In der Straße 3 ist ein Kraftfahrzeug 13 angeordnet, das einen Zusatzinformationsempfänger 14 besitzt, welches eine Zusatzinformation 15 in Form des Gefahrensignals 11 empfängt. Das Kraftfahrzeug 13 hat einen Warnsignalgeber 16, welcher einen nicht dargestellten Fahrer mit einem Warnsignal 17 über eine erhöhte Unfallgefahr aufgrund des erhöhten Unfallrisikos informiert. Ferner weist das Kraftfahrzeug 13 eine Navigationseinrichtung 18 auf, welche satellitengestützt eine geographische Position des Kraftfahrzeugs 13 ermittelt. Zudem ist im Kraftfahrzeug 13 eine Einrichtung 34 vorgesehen, welche Zusatzinformation 15 in Form von geographischen Positionen von den vorbestimmten Verkehrsstellen 5 erhält, an denen dann ein erhöhtes Unfallrisiko vorliegt, wenn das Gefahrensignal 11 empfangen wird. Auch ist eine Ermittlungsvorrichtung 39 im Kraftfahrzeug 13 vorgesehen, die aus der Position des Kraftfahrzeugs 13 und der Zusatzinformation 15 das Unfallrisiko ermittelt. Somit wird eine Fahrzeugassistenzeinrichtung (19) aus Elementen des Kraftfahrzeugs (13) und des Transportmittels (7) gebildet. Das Kraftfahrzeug 13 bewegt sich in Richtung eines Pfeils 19'. Im Haltestellenbereich 6 sind mehrere Personen 20 dargestellt, wobei sich eine erste Person 21 unaufmerksam in Richtung eines Pfeils 22 auf den Zug 8 zubewegt Eine zweite Person 23 und eine dritte Person 24 befinden sich ebenfalls auf der Straße 3 und bewegen sich unaufmerksam in Richtung der Pfeile 25 und 26 von der Haltestelle 5' weg.

Die Figur 1 zeigt den Zug 8 stehend an der Haltestelle 5'. Daraus ergibt sich in der Regel, dass eine bestimmte Anzahl Personen 20 ein- und aussteigt. Durch das Ein- und Aussteigen ergeben sich häufig unfallkritische Situationen durch abgelenkte oder unaufmerksame Personen 21, 23 und 24, die die Straße 3 überqueren, um entweder den Zug 8 zu erreichen oder die Haltestelle 5' zu verlassen. Da diese Situation nur dann eintritt, wenn sich ein Zug 8 an der Haltestelle 5' befindet, ist die Haltestelle 5' eine der vorbestimmten Verkehrsstellen 5 , an der dann ein erhöhtes Unfallrisiko vorliegt, wenn mindestens ein Zusatzparameter erfüllt wird, wobei hier der Zusatzparameter die Anwesenheit des Zugs 8 an der Haltestelle 5' ist. Der Zug 8 ermittelt mittels seiner Navigationseinrichtung 12 seine eigene geographische Position, woran dieser erkennt, dass er sich im Bereich an der Haltestelle 5' befindet. Aufgrund der geographischen Position und der sich damit ergebenden Situation sendet der Zug 8 als Geber 9 über den Gefahrensignalsender 10 das Gefahrensignal 11 aus. Das Kraftfahrzeug 13 bewegt sich in Richtung des Pfeils 19' in den Haltestellenbereich 6 hinein. Mittels der Navigationseinrichtung 18 wird die geographische Position des Kraftfahrzeugs 13 ermittelt. Durch Verwendung der Zusatzinformationen 15 in Form von geographischen Positionen vorbestimmter Verkehrsstellen 5 aus der Einrichtung 34, nämlich der geographischen Positionen der Haltestellen 5', zusammen mit der geographischen Position des Kraftfahrzeugs 13 aus der Navigationseinrichtung 18 ermittelt die Ermittlungsvorrichtung 39, dass sich das Kraftfahrzeug 13 innerhalb der Verkehrsstelle 5 mit erhöhtem Unfallrisiko befindet. Da es sich dabei, wie bereits erwähnt, um eine der Verkehrsstellen 5 handelt, bei der das erhöhte Unfallrisiko nur dann vorliegt, wenn mindestens der Zusatzparameter erfüllt wird, ist aufgrund der Position des Kraftfahrzeugs 13 lediglich eine erste Bedingung für ein Auslösen des Warnsignals 17 gegeben. Eine zweite Bedingung, die Erfüllung des Zusatzparameters, ergibt sich aus der Anwesenheit des Zugs 8 an der Haltestelle 5', was mittels des Gefahrensignals 11 signalisiert wird. Das Kraftfahrzeug 13 empfängt das Gefahrensignal 11 als Zusatzinformation 15 über den Zusatzinformationsempfänger 14 und leitet diese Zusatzinformation 15 an die Ermittlungsvorrichtung 39 als weitere, zweite Zusatzinformation 15 weiter. Somit ist auch die zweite Bedingung für das Auslösen des Warnsignals 17 in der Ermittlungsvorrichtung 39 erfüllt. Aufgrund dieser Tatsache löst diese Ermittlungsvorrichtung 39 das Warnsignal 17 des Warnsignalgebers 16 aus, wodurch der Fahrer über das erhöhte Unfallrisiko und somit über die erhöhte Unfallgefahr informiert wird. Der Fahrer kann somit frühzeitig die Situation erfassen und sich und seine Fahrweise auf die Situation einstellen. Aufgrund der Verwendung von zwei Bedingungen für das Auslösen des Warnsignals 17 ergibt sich, dass der Fahrer nur dann gewarnt wird, wenn aktuell tatsächlich eine unfallkritische Situation für den Fahrer vorliegt. Befindet sich kein Zug 8 an der Haltestelle 5' während sich das Kraftfahrzeug 13 im Haltestellenbereich 6 befindet oder befindet sich der Zug 8 an der Haltestelle 5' und das Kraftfahrzeug 13 befindet sich außerhalb des Haltestellenbereichs 6, dann ist jeweils nur eine Bedingung erfüllt und der Fahrer wird nicht gewarnt. Diese Unterscheidung ist deshalb besonders vorteilhaft, da dadurch eine Gewöhnung des Fahrers durch ein unbegründetes Warnen an das Warnsignal 17 vermieden wird, was eine Verringerung einer Warnwirkung zur Folge hätte.

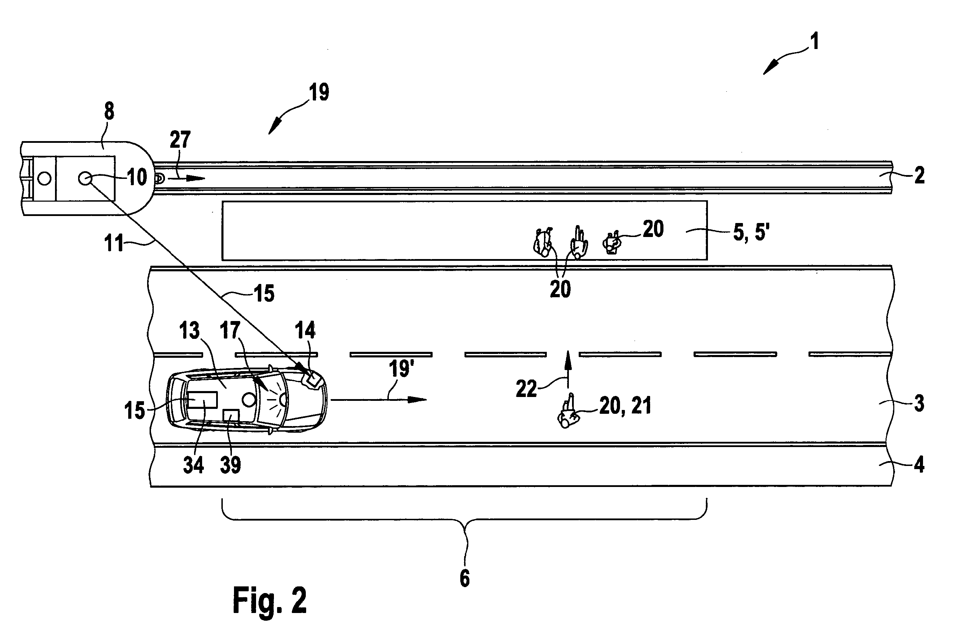

Die Figur 2 zeigt eine zweite unfallkritische Situation in dem gleichen geographischen Ausschnitt 1, der die gleichen Merkmale wie in Figur 1 aufweist. Sie unterscheidet sich von der ersten Verkehrssituation aus Figur 1 darin, dass sich der Zug 8 nicht an der Haltestelle 5' befindet, sondern sich entlang einer Richtung eines Pfeils 27 auf die Haltestelle 5' zu bewegt. Ferner sind die zweite und dritte Person 23 und 24 nicht vorhanden. Die unfallkritische Situation ergibt sich hierbei durch die Person 21, welche in Richtung des Pfeils 21 über die Straße 3 auf die Haltestelle 5' zugeht, um den herannahenden Zug 8 zu erreichen. Um den Fahrer des Fahrzeugs 13 mittels des Warnsignals 17 zu warnen, wird von dem Zug 8 über den Gefahrensignalsender 10 ein Gefahrensignal 11 ausgesandt, welches als Zusatzinformation 15 über den Zusatzinformationsempfänger 14 des Kraftfahrzeugs 13 empfangen wird. Somit wird der Fahrer bereits dann mittels des Warnsignals 17 gewarnt, wenn sich das Kraftfahrzeug 13 innerhalb des Haltestellenbereichs 6 befindet und sich der Zug 8 an die Haltestelle 5' annähert.

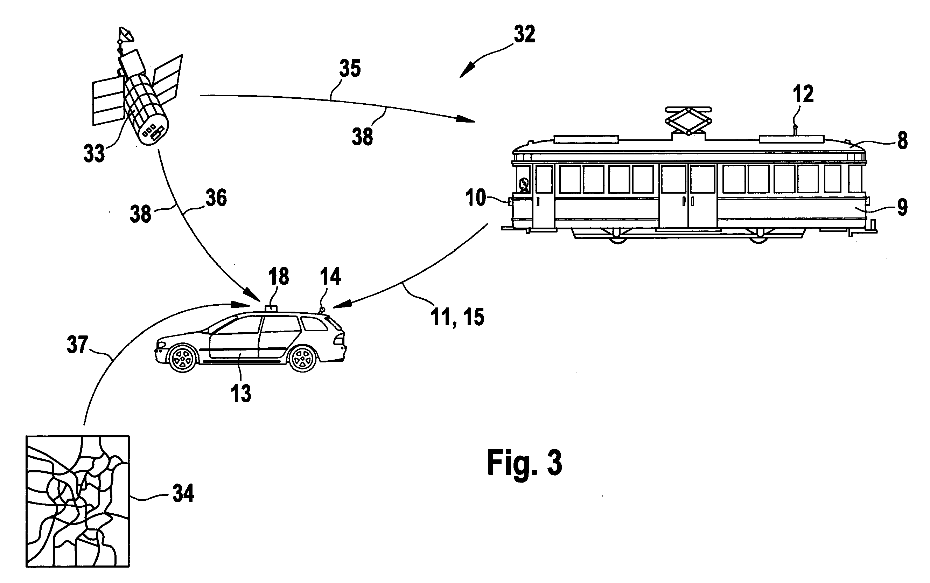

Die Figur 3 zeigt einen Signallaufplan 32, welcher Signalverläufe innerhalb des erfindungsgemäßen Verfahrens verdeutlichen soll. Die Figur 3 zeigt das Kraftfahrzeug 13, den Zug 8, der als Geber 9 ausgestaltet ist, sowie einen Satelliten 33. Ferner ist die Einrichtung 34 schematisch dargestellt, welche Zusatzinformationen 15 in Form von Navigationsdaten enthält. Der Satellit 33 sendet ein Navigationssignal 38 über einen Pfeil 35 an die Navigationseinrichtung 12 des Zugs 8 und das Navigationssignal 38 über einen Pfeil 36 an die Navigationseinrichtung 18 des Kraftfahrzeugs 13. Der Zug 8 in Form des Gebers 9 sendet mittels des Gefahrensignalsenders 10 das Gefahrensignal 11 als Zusatzinformation 15 an den Zusatzinformationsempfänger 14 des Kraftfahrzeugs 13. Ferner wird dem Kraftfahrzeug 13 aus der Einrichtung 34 Zusatzinformation 15 in Form von Daten über geographische Positionen von Verkehrsstellen 5 mit erhöhtem Unfallrisiko über einen Pfeil 37 übermittelt.

Somit erhält das Kraftfahrzeug 13 sämtliche Informationen, die benötigt werden, um ein erhöhtes Unfallrisiko zu ermitteln und aufgrund dessen den Fahrer gegebenenfalls mittels des Warnsignals 17 zu warnen. Die Einrichtung 34 kann in einer besonders vorteilhaften Ausgestaltung in die Navigationseinrichtung 18 integriert sein. Ferner ist es denkbar, auch die Ermittlungsvorrichtung 39, den Warnsignalgeber 16 und den Zusatzinformationsempfänger 14 in die Navigationseinrichtung 18 zu integrieren.

## Patentansprüche

1. Verfahren zum Informieren des Fahrers eines Kraftfahrzeugs (13) über eine erhöhte Unfallgefahr, wobei die geographische Position des Kraftfahrzeugs (13) erfasst wird, aus ihr gemeinsam mit mindestens einer Zusatzinformation (15) ein Unfallrisiko ermittelt wird und der Fahrer bei Ermittlung eines vorbestimmten, erhöhten Unfallrisikos mit einem Warnsignal (17) gewarnt wird, **dadurch gekennzeichnet, dass** als Zusatzinformation (15) mindestens eine geographische Position von einer Haltestelle (5') von einem Transportmittel (7) des öffentlichen Personennahverkehrs verwendet wird, an der ein erhöhtes Unfallrisiko vorliegt oder vorliegt, wenn mindestens ein Zusatzparameter erfüllt wird.

2. Verfahren nach Anspruch 1, **dadurch gekennzeichnet, dass** als Zusatzinformation (15) mindestens ein im Kraftfahrzeug (13) empfangenes Gefahrensignal (11) eines Gebers (9) verwendet wird.

3. Verfahren nach Anspruch 2, **dadurch gekennzeichnet, dass** sich das vorbestimmte, erhöhte Unfallrisiko ergibt, wenn sich die erfasste Position des Kraftfahrzeugs (13) in einem vorgegebenen Bereich um die Haltestelle (5') befindet und gleichzeitig das Gefahrensignal (11) empfangen wird.

4. Verfahren nach einem der Ansprüche 1 bis 3, **dadurch gekennzeichnet, dass** die geographische Position der Haltestelle (5') als innerhalb des Kraftfahrzeugs (13) gespeicherte Zusatzinformation (15) vorliegt und/oder dass sie als von außen, kabellos zugeführte Zusatzinformation (15) vom Kraftfahrzeug (13) empfangen wird.

5. Verfahren nach einem der Ansprüche 2 bis 4, **dadurch gekennzeichnet, dass** das Transportmittel (7) des öffentlichen Personennahverkehrs als Geber (9) wirkt.

6. Verfahren nach einem der Ansprüche 2 bis 5, **dadurch gekennzeichnet, dass** das Gefahrensignal (11) von dem Transportmittel (7) dann ausgesendet wird, wenn es sich im Bereich der Haltesstelle (5') befindet.

7. Verfahren nach einem der Ansprüche 1 bis 6, **dadurch gekennzeichnet, dass** das Warnsignal (17) optisch, akustisch und/oder haptisch auf den Fahrer wirkt.

8. Fahrzeugassistenzanordnung (19) zum Informieren des Fahrers eines Kraftfahrzeugs (13) über eine erhöhte Unfallgefahr, insbesondere zur Durchführung des Verfahrens nach einem oder mehreren der vorhergehenden Ansprüche, mit einer Navigationseinrichtung (18), die die geographische Position des Kraftfahrzeugs (13) ermittelt, **gekennzeichnet durch** eine Einrichtung (34), die mindestens eine Zusatzinformation (15) besitzt oder empfängt, wobei die Zusatzinformation (15) mindestens eine geographische Position von einer Haltestelle von einem Transportmittel des öffentlichen Personennahverkehrs umfasst, eine Ermittlungsvorrichtung (39), die aus der Position des Kraftfahrzeugs (13) und der Zusatzinformation (15) ein Unfallrisiko ermittelt und einen Warnsignalgeber (16), der auf den Fahrer wirkt, wenn die Ermittlungsvorrichtung (39) ein vorbestimmtes, erhöhtes Unfallrisiko ermittelt.

9. Fahrzeugassistenzanordnung (19) nach Anspruch 8, **gekennzeichnet durch** einen Zusatzinformationsempfänger (14) innerhalb des Kraftfahrzeugs (13), der die Zusatzinformation (15) von außen, kabellos empfängt.

10. Fahrzeugassistenzanordnung (19) nach einem der Ansprüche 8 bis 9, **gekennzeichnet durch** mindestens einen Gefahrensignalsender (10) eines Transportmittels (7) des öffentlichen Personennahverkehrs, der mindestens eine Zusatzinformation (15) in Form eines Gefahrensignals (11) an den Zusatzinformationempfänger (14) sendet.

## Claims

1. Method for informing the driver of a motor vehicle (13) about increased risk of an accident, wherein the geographic position of the motor vehicle (13) is detected, a risk of an accident is determined therefrom together with at least one additional information item (15), and when a predetermined increased risk of an accident is determined the driver is warned with a warning signal (17), **characterized in that** at least one geographic position of a stopping point (5') of a means (7) of public transportation is used as the additional information (15), at which stopping point (5') an increased risk of an accident is present, or is present if at least one additional parameter applies.

2. Method according to Claim 1, **characterized in that** at least one danger signal (11), received in the motor vehicle (13), of a signal generator (9) is used as additional information (15).

3. Method according to Claim 2, **characterized in that** the predetermined increased risk of an accident occurs if the detected position of the motor vehicle (13) is in a predefined region around the stopping point (5') and at the same time the danger signal (11) is received.

4. Method according to one of Claims 1 to 3, **characterized in that** the geographic position of the stopping point (5') is present as additional information (15) which is stored inside the motor vehicle (13), and/or **in that** said geographic position is received as additional information (15), fed in from the outside in a cableless fashion, by the motor vehicle (13).

5. Method according to one of Claims 2 to 4, **characterized in that** the means (7) of public transportation acts as a signal generator (9).

6. Method according to one of Claims 2 to 5, **characterized in that** the danger signal (11) is output by the means (7) of transport if said means (7) of transport is located in the region of the stopping point (5').

7. Method according to one of Claims 1 to 6, **characterized in that** the warning signal (17) acts optically, acoustically and/or haptically on the driver.

8. Vehicle assistance arrangement (19) for informing the driver of a motor vehicle (13) about an increased risk of an accident, in particular for carrying out the method according to one or more of the preceding claims, having a navigation device (18) which determines the geographic position of the motor vehicle (13), **characterized by** a device (34) which has or receives at least one additional information item (15), wherein the additional information (15) comprises at least one geographic position of a stopping point of a means of public transport, a determining device (39), which determines a risk of an accident from the position of the motor vehicle (13) and the additional information (15), and a warning signal generator (16) which acts on the driver if the determining device (39) determines a predetermined, increased risk of an accident.

9. Vehicle assistance arrangement (19) according to Claim 8, **characterized by** an additional information receiver (14) within the motor vehicle (13) which receives the additional information (15) from the outside in a cableless fashion.

10. Vehicle assistance arrangement (19) according to one of Claims 8 to 9, **characterized by** at least one danger signal transmitter (10) of a means (7) of public transport, which means (7) transmits at least one additional information item (15) in the form of a danger signal (11) to the additional information receiver (14).

## Revendications

1. Procédé d'information du conducteur d'un véhicule automobile (13) sur un risque d'accident accru, la position géographique du véhicule automobile (13) étant détectée, un risque d'accident étant calculé à partir de ladite position conjointement avec au moins une information supplémentaire (15) et le conducteur étant averti par un signal d'avertissement (17) en cas de détermination d'un risque d'accident accru prédéfini, **caractérisé en ce que** l'information supplémentaire (15) utilisée peut prendre la forme d'au moins une position géographique d'un point d'arrêt (5') d'un moyen de transport (7) de transport public de proximité comportant un risque d'accident accru ou lorsqu'au moins un paramètre supplémentaire est rempli.

2. Procédé selon la revendication 1, **caractérisé en ce que** l'information supplémentaire (15) utilisée prend la forme d'au moins un signal d'alarme (11) reçu dans le véhicule automobile (13) en provenance d'un émetteur (9).

3. Procédé selon la revendication 2, **caractérisé en ce que** le risque d'accident accru prédéfini est constaté lorsque la position détectée du véhicule automobile (13) se trouve dans une zone prédéfinie située aux alentours du point d'arrêt (5') d'un moyen de transport public et que le signal d'alarme (11) est reçu simultanément.

4. Procédé selon l'une quelconque des revendications 1 à 3, **caractérisé en ce que** la position géographique du point d'arrêt (5') de moyen de transport public utilisée prend la forme d'une information supplémentaire (15) mémorisée à l'intérieur du véhicule automobile (13) et/ou que cette position est reçue par le véhicule automobile (13) sous la forme d'une information supplémentaire (15) extérieure amenée sans fil.

5. Procédé selon l'une quelconque des revendications 2 à 4, **caractérisé en ce que** le moyen de transport (7) de transport public de proximité agit sous la forme d'un émetteur (9).

6. Procédé selon l'une quelconque des revendications 2 à 5, **caractérisé en ce que** le signal d'alarme (11) est envoyé par le moyen de transport (7) lorsqu'il se trouve dans la zone de son point d'arrêt (5').

7. Procédé selon l'une quelconque des revendications 1 à 6, **caractérisé en ce que** le signal d'avertissement (17) agit optiquement, acoustiquement et/ou haptiquement sur le conducteur.

8. Dispositif d'assistance de véhicule (19) permettant d'informer le conducteur d'un véhicule automobile (13) sur un risque d'accident accru, notamment en vue de mettre en oeuvre le procédé selon l'une quelconque des revendications précédentes ou plusieurs d'entre elles, avec un dispositif de navigation (18) calculant la position géographique du véhicule automobile (13), **caractérisé par** la présence d'un dispositif (34) possédant ou recevant l'au moins une information supplémentaire (15), l'information supplémentaire (15) comprenant une position géographique d'un point d'arrêt d'un moyen de transport public de proximité, un dispositif de calcul (39) calculant à partir de la position du véhicule automobile (13) et de l'information supplémentaire (15) un risque d'accident et un émetteur de signal d'avertissement (16) agissant sur le conducteur lorsque le dispositif de calcul (39) calcule un risque d'accident accru prédéfini.

9. Dispositif d'assistance de véhicule (19) selon la revendication 8, **caractérisé par** la présence d'un récepteur d'information supplémentaire (14) situé à l'intérieur du véhicule automobile (13) et recevant sans fil l'information supplémentaire (15) en provenance de l'extérieur.

10. Dispositif d'assistance de véhicule (19) selon l'une quelconque des revendications 8 à 9, **caractérisé par** la présence d'au moins un émetteur de signal d'alarme (10) d'un moyen de transport (7) de transport public de proximité envoyant au moins une information supplémentaire (15) au récepteur d'information supplémentaire (14) sous la forme d'un signal d'alarme (11).
